Europäisches Patentamt

European Patent Office

Office européen des brevets

(19)

(11) **EP 0 854 029 A2**

(12) **EUROPEAN PATENT APPLICATION**

(43) Date of publication:
22.07.1998 Bulletin 1998/30

(51) Int Cl.⁶: **B29D 1/00**

(21) Application number: 97308411.4

(22) Date of filing: 22.10.1997

(84) Designated Contracting States:
**AT BE CH DE DK ES FI FR GB GR IE IT LI LU MC
NL PT SE**
Designated Extension States:
**AL LT LV RO SI**

(30) Priority: 22.10.1996 GB 9621976

(71) Applicant: **NEWCASTLE UNIVERSITY
VENTURES LIMITED
Jesmond, Newcastle upon Tyne NE2 4HE (GB)**

(72) Inventors:
• **Fahrer, Alwin
Knutsford Cheshire (GB)**

• **Gibson, Arthur Geoffrey
Newcastle upon Tyne NE3 1XQ (GB)**

(74) Representative: **Jones, William et al
William Jones CPA
The Crescent
54 Blossom Street
York YO2 2AP (GB)**

Remarks:
Claim 11 to 16 is deemed to be abandoned due to
non-payment of the claims fee (Rule 31 (2) EPC).

(54) **Manufacture of reinforced composite revolution bodies**

(57) Process for manufacture of reinforced composites revolution bodies comprising contacting at elevated temperature a plurality of substantially aligned continuous reinforcing fibres with molten extruded thermoplastic and/or thermoset resin, and contacting the fibre supported molten resin with a continuous thermoplastic and/or thermoset revolution body in manner to provide a continuously wound reinforced body, apparatus for the manufacture thereof, continuous reinforced composite revolution body obtained thereby and its use for distribution of fluid in a continuous network and component parts of the process and apparatus.

Figure 5

## Description

The present invention relates to a process and apparatus for the manufacture of continuous fibre reinforced continuous thermoplastic or thermosetting composite revolution bodies, to reinforced continuous composite revolution bodies obtained thereby and applications thereof. More particularly the invention relates to a method for continuous in-line extrusion, impregnation and winding of resin and continuous reinforcing fibre about a continuous revolution body, revolution bodies obtained thereby and applications thereof.

Reinforced thermoplastic pipes (RTPs) are potentially of significant application in the distribution of gaseous and liquid fluids, for example in gas, water, oil and chemical distribution. Existing distribution networks employ typically metallic, such as steel or cast iron transmission pipes, for example in gas distribution, or cured thermosetting resin pipes, such as epoxy glass reinforced pipes, for example in transport of aqueous and hydrocarbon fluids. For more strenuous applications, for example in off-shore applications for transport of hydrocarbons, high strength composite RTPs have been proposed, such as aramid fibre reinforced pipes, however the prohibitive expense incurred by their manufacture renders the RTPs commercially uneconomic.

RTPs are suited for the above applications in view of excellent properties in terms of load-bearing, creep behaviour, stress cracking, long term rupture resistance and the like, in addition to their suitability for manufacture in continuous lengths which may be conveniently coiled for transport to site. These, amongst other properties, would render such pipes easier and less expensive to install and maintain.

Discontinuously reinforced thermoplastic pipe products, in which a section of pipe is wound with a reinforcing fibre in repeated passes along the length thereof are of limited interest for distribution network applications. In preference, continuously reinforced thermoplastic pipe products are typically manufactured by helical winding of a plurality of aligned reinforcing fibres in a single pass along the length of a continuous stretch thereof. Such continuous processes employ either dry reinforcement, which cannot subsequently be properly impregnated with resin, thus giving inferior properties, or pre-impregnated reinforcement, generally in the form of a tape which must be manufactured by a separate process. This latter, whereby fibre from a creel or drum is contacted by coating or impregnation with extruded polymer matrix material, and rewound onto a further creel or drum for subsequent use in continuous reinforcing, suffers the disadvantages of a two stage process, via a semi-finished product, which is moreover relatively expensive.

Thermoplastic resins, and some thermoset resins are of high viscosity rendering impregnation thereof into reinforcing fibres difficult and prone to poor quality.

Accordingly there is a need for a process for the manufacture of RTPs having excellent properties suited for elevated pressure fluid distribution, and which may be obtained in continuous lengths, and at considerable cost benefit enabling the application thereof in existing and new distribution networks.

We have now found a process for the manufacture of continuous reinforced thermoplastic revolution bodies which provides the hereinbefore mentioned advantages and objects in admirable manner.

In its broadest aspect there is provided according to the present invention a process for the manufacture of reinforced composite revolution bodies comprising contacting at elevated temperature a plurality of substantially aligned continuous reinforcing fibres with molten extruded thermoplastic and/or thermoset resin, and contacting the fibre supported molten resin with a continuous thermoplastic and/or thermoset revolution body in manner to provide a continuously wound reinforced body.

Continuous winding of continuous fibres on the continuous body is suitably achieved by advancing the continuous body in its axial direction.

By the process of the invention resin precursor and reinforcing fibre are contacted and wound in an integral low cost process, providing excellent impregnation and bonding rendering the product continuous revolution body with desired properties adapted for the hereinbefore mentioned applications.

Contacting the fibre and resin may be performed in manner to achieve impregnation and/or coating thereof, depending on the required properties to be attained. The degree of impregnation and/or coating may be determined in known manner by selection of resin viscosity, process conditions and the like. The advantages of the invention are particularly apparent for winding of high viscosity thermoplastic or thermoset resin impregnated fibres, preferably thermoplastic. It is a particular feature of the invention that contracting of fibre and resin takes place substantially simultaneously with the heating and winding thereof.

Reference herein to continuous fibre and revolution body is to lengths of fibre and body provided suitably from creels, drums and the like and adapted to be stored as finished product on a creel, drum or the like whereby substantially any desired length product may be prepared. This has advantages in terms of convenient and reliable installation avoiding the need for frequent joining, for example by welding, of discontinuous sections.

Reference herein to reinforcing fibre is to any known fibre preferably in the form of bundles of fibres, or "tow's" as known in the art. Suitably fibre is selected from glass fibres, such as E-glass, S-glass, aramid fibres, carbon fibres and the like. By the process of the invention it is possible to achieve performance levels with E-glass which approach those of the costly aramid based products. The fibres may be of any desired grade and may be employed in any desired multiplicity which will be dependent on the winding apparatus employed.

Reference herein to thermoplastic resin is to any known resin employed in the art which is characterised by properties of flexibility, mechanical integrity and superior heat resistance. Preferably thermoplastic resin is selected from any semicrystalline thermoplastic resin, such as high or medium density polyethylene (HDPE, MDPE), polypropylene (PP), polyetherether ketone (PEEK) and polyphenylene sulfide (PPS), polyamide such as Polyamide 6, 66, 11 or 12 and polyvinylidene fluoride (PVDF), any amorphous or substantially amorphous thermoplastic resin such as polycarbonate (PC), polymethylmethacrylate (PMMA), or polyvinyl chloride (PVC) and combinations thereof. In a particular advantage the resin employed comprises PE or PP which are available as lower cost resins. It is a particular advantage that the process of the invention is particularly suited to operation with addition of additives which may be employed to substantially overcome the poor coupling inherent with certain non-polar or low-polarity resins such as PE and PP. In a further advantage thermoplastic resin comprising PE provides a product which is compatible and weldable with existing pipework. PP is also very attractive in terms of processability and the achievement of good properties for low cost. PP and PE are of advantage for providing further property improvement and polyvinylidene fluoride is of particular advantage for use with high temperature transport of corrosive fluids.

The thermoplastic resin may further comprise or be combined with other additives or components as desired and as known in the art, for example viscosity modifiers, coupling additives, cross-linking agents, molecular weight reducing additives, stabilisers, pigments and the like.

Reference herein to a revolution body is to any preformed body which may be rotated about its axis or, in the process of the invention, about the axis of which a bundle of reinforcing fibres may be wound in continuous manner. The revolution body suitably comprises a preferably hollow or otherwise solid article of prismatic section, especially of tubular shape such as a cylinder, pipe or the like, of any suitable diameter of the order of mm to m as desired. Preferably a revolution body comprises a hollow thermoplastic resin pipe which is obtained by extrusion as known in the art. Thermoplastic pipe for use as a revolution body to be reinforced according to the present invention maybe manufactured by in-line extrusion integral with the process of the present invention, or may be pre-extruded and stored as a continuous coil adapted to be reinforced according to the present invention. It will be appreciated that the particular properties of thermoplastic resin products render them suitable for storage by coiling prior to and/or subsequent to reinforcing according to the present invention.

Suitably the thermoplastic resin is obtained directly from pellets, powder and the like which are adapted to be extruded as known in the art. The pellets may be extruded in a stationary extruder as known in the art, for example a screw extruder, adapted in manner that the polymer melt so produced may be transferred to a reservoir provided in a rotary assembly, from which the melt is transferred to one or more supports selected from knives, wedges, cylindrical or barrel shaped supports such as baffles, plates, pins or the like and non cylindrical shaped surfaces, provided in the rotary assembly, and adapted to lie in the fibre path. Suitably the fibre is provided from a plurality of creels, drums and the like in the form of reels adapted to unwind and continuously release or reel-out a sufficient length of fibre to make continuous products of required length, and which are mounted in suitable manner on the rotary assembly to enable winding of reeled out fibre about a continuous revolution body coaxial with the rotary assembly. Accordingly it will be apparent that a fibre "tow" is drawn from a creel via a support for molten resin to a head, each provided as components of a rotary assembly, and thence is laid down in helically wound manner on a revolution body as hereinbefore defined.

By the process of the invention the fibre "tow" is suitably impregnated or coated and laid down in manner to provide the desired reinforcing. Impregnated or coated "tow" may suitably be laid down in manner to completely cover the entire surface of a revolution body by helical winding in one or both senses about the axis of the revolution body. Winding of impregnated or coated "tow" in both senses is suitably carried out in known manner by means of a first rotary assembly adapted to rotate in a first sense about a continuous revolution body and a second rotary assembly adapted to rotate in the opposite sense, and located upstream or downstream of the first rotary assembly.

The angle of helical winding, defined relative to the axis of the revolution body, (an angle of 0°C representing parallel alignment of fibres and axis, and an angle of 90° representing fibres aligned in the circumference direction) is suitably adapted as desired by means of adapting the speed of advancement of the continuous revolution body and/or the speed of rotation of the head. The angle may be selected with reference to the magnitude and direction of load to be withstood in use of the reinforced body and is preferably of the order of 25° to 90°. In a first embodiment the angle of helical winding is of the order of +/- 50°C to 60°C, preferably +/- 53°C to 57°C, for example +/- 55°C, for fibres wound in both senses about a thermoplastic body reinforced by means of "full-wrapping" as known in the art, to be used for pressure piping. In a second embodiment the helical winding angle is of the order of + 85°C to substantially 90°C, preferably + 88°C to 89.9°C, for example substantially fractionally less than 90°C, for a fibre "tow" wound in one sense only about a thermoplastic body reinforced by means of "hoop-wrapping", as known in the art.

The angle $\theta$ may be determined for any rotational speed $\omega$ (rev/min) of the impregnation unit, for axial product speed $u$ (m/min) and for a diameter $d$ (m) of revolution body by the relationship:

$$\theta = \tan^{-1} \frac{(\pi dw)}{(u)}$$

The rotating head is suitably adapted to lay down a plurality of fibres continuously for any given diameter revolution body. Preferably the rotating head is adapted to lay down any desired multiplicity of fibres according to the diameter of revolution body to be wound, whereby the multiplicity of fibres is proportional to the revolution body diameter.

It is a particular advantage of the invention that the process is carried out at elevated operating temperature enabling the fusion and consolidation of component parts. Accordingly the product is sufficiently cooled and finished at a distance downstream of the rotating assembly, to enable winding onto a drum for storage. The operating temperature may be selected as appropriate for the purpose of obtaining and maintaining the resin in molten form at a desired viscosity to enable effective coating and/or impregnation of the fibres and bonding to the revolution body. A suitable processing temperature is therefore 5-80°C above the melting point of a semicrystalline thermoplastic resin, 40-180°C above the glass transition temperature for an amorphous thermoplastic or as recommended by thermoplastic or thermoset polymer supplier.

Heat required for this purpose may be provided by any known means from a stationary or rotating heat source, for example in the form of radiant or conducted heat from a stationary heat source such as a gas burner or other fuel combustion apparatus or the like or conducted via adjacent tooling; or electrically, for example by electrical resistance using band or cartridge heaters with appropriate temperature control, the electrical power being supplied by moving slip ring contact in known manner. The same or different source of heat may advantageously be employed in manner to cause softening of the surface of the revolution body upstream of the winding head, whereby excellent bonding and consolidation may be obtained. Suitably the outer surfaces of the rotating assembly are insulated to reduce loss of heat.

Additional heat may be provided directly to the fibres which may be passed through holes or channels in the rotary assembly and preheated before being contacted with molten resin in impregnation stage thereof.

The amount of the thermoplastic impregnation or coating may be selected as desired. Suitably the amount of thermoplastic resin taken up by the fibres is proportional to the fibre volume and may be selected by known means, for example by rendering the resin with a desired viscosity which should not be too high to enable satisfactory impregnation. It will be appreciated that the amount of thermoplastic resin taken up by the fibres may be adapted as desired by known means, for example by mechanical means whereby excess resin is wiped off by a wipe-off dye and preferably recycled back to the reservoir of molten resin.

Optionally a further outer layer of thermoplastic resin may be provided by means of contacting the reinforced revolution body downstream of the winding head with extruded molten thermoplastic resin. By this means a protective layer is provided which may be of particular advantage for specific applications. The resin is suitably provided by known means for example by a stationary annular extruder die, to the surface of the revolution body.

In a further aspect of the invention there is provided a rotary impregnation and overwinding apparatus comprising a rotary assembly adapted to provide a plurality of continuous fibres, rotary support means adapted to provide one or more reservoirs of molten thermoplastic and/or thermoset resin and a rotary head adapted to lay down impregnated fibre onto an advancing continuous thermoplastic and/or thermoset revolution body co-axial therewith.

It is a particular advantage of the invention that the impregnation and/or coating of fibres with thermoplastic takes place within the rotary apparatus or associated in rotary manner therewith. This produces a hot impregnated or coated product that bonds well to the surface of the thermoplastic revolution body. Heating of pre-impregnated tape to melt the resin prior to winding is difficult to achieve.

The component parts of the apparatus are suitably adapted to the operation of the process as hereinbefore defined, in manner to provide a reinforced revolution body comprising impregnated or coated fibre "tow" helically wound in one or both sense(s), hoop or full wrap as hereinbefore defined.

The rotary assembly and rotary head may be selected from any such components known respectively for the overwinding of pre-impregnated tape as known in the art, and for the pre-impregnation of fibres to prepare tape for subsequent use in overwinding, as known in the art. It will be appreciated therefore that the assembly, comprising essentially mountings for creels of fibre, is associated with the rotary head which essentially comprises channels, apertures, recesses or the like adapted to receive aligned fibres, in addition to non-cylindrical or cylindrical shaped support surfaces, selected from one or more knives, wedges, pins, baffles barrel-shaped surfaces and the like adapted to tension and enable impregnation of fibres by a desired degree of spreading thereof, and a further set of channels, apertures, recesses and the like through which the impregnated and/or coated fibre is passed for conditioning thereof and guiding for accurate lay down on the revolution body.

Any arrangement may be adopted comprising these components which is capable of achieving the desired objects. Preferably the rotary head comprises a plurality of, preferably 2 to 20, more preferably 3 to 10, for example 3 to 7 supports as herein before defined, which may be profiled in manner to improve the efficiency of impregnation, for example which may be rotating or fixed relative to the body of the rotary assembly and may comprise a convex or a concave profile whereby tensioning and spreading of fibres may be modified or enhanced.

Without being limited to this theory it is thought that the curved surfaces reduce thickness of tows by spreading, thereby aiding impregnation. Moreover, a wedge of molten resin is entrained between the moving tow and each support, causing resin to be pressurised and squeezed into the tow. The mechanism of pressure generation at the support is similar to that in the lubricant of a rotating journal bearing. The supports may have any suitable orientation, which may be calculated to prevent sideways slippage of tows. Supports may be orientated with axes parallel to, tangential to, inclined or otherwise with respect to the axis of the assembly.

The fibres are suitably conditioned prior to lay down by means of passing through a die which serves to wipe off excess resin and to ensure the uniformity of resin carried by the fibres. This die may conveniently serve for the purpose of tensioning and guiding of fibres to the overwinding stage, in manner to provide uniform spreading onto the surface of the revolution body.

Rotary support means as hereinbefore defined are suitably any means capable of providing one or more reservoirs of molten thermoplastic resin to the rotary head. As hereinbefore defined the extruder is separate from the apparatus of the invention, whereby it is stationary and comprises conventional extrusion apparatus adapted in manner to provide a continuous flow of molten resin to the rotary support means of the apparatus. In a preferred embodiment of the invention the rotary support means comprises a continuous aperture arranged as an annulus in the apparatus as hereinbefore defined which is adapted to be associated with supply means projecting from the extruder. It will be appreciated that this enables the rotation of the apparatus whilst receiving one or more supply means comprising pipes or the like projecting from the extruder.

The supply means from the extruder may be stationary or rotating, for example a stationary hollow conduit or a rotating union for molten resin and/or tow preferably projects within the aperture comprising the rotary support means and provides a reservoir as hereinbefore defined by gravitational or contact expulsion of molten resin from the supply means. The molten resin is preferably provided in the form of a reservoir in manner that it may be picked up by fibres or impregnating supports as hereinbefore defined. For example the reservoir may comprise a channel passing to the impregnation means or as guide means for fibres. Preferably the reservoir is located in manner that continuous flow of molten resin is encouraged by the centrifugal forces generated by rotation of the apparatus, whereby the molten resin is supplied to reservoirs located radically inward from the desired site of impregnation.

Preferably the rotary support means is maintained at elevated temperature as hereinbefore defined by means of radiant or conduction heat provided from stationary heat sources or electrically, by means of slip ring contact.

It will be appreciated that modification and optimisation of the component parts of the apparatus may be made within the general concept as hereinbefore defined, for co-operative functioning thereof. Such modifications are considered to be within the scope of the present invention, and will be readily apparent to the man skilled in the art.

In a further aspect of the invention there is provided a continuous reinforced composite thermoplastic and/or thermoset revolution body obtained by the process as hereinbefore defined. Preferably the revolution body is characterised by excellent mechanical properties by virtue of the impregnation and overwinding process of the invention and is obtained in convenient and cost effective manner.

In a further aspect of the invention there is provided the use of a continuous reinforced composite thermoplastic and/or thermoset pipe as hereinbefore defined for the distribution of fluid in a continuous network, preferably for the distribution of gaseous or liquid fluid at elevated pressure.

In a further aspect of the invention there is provided continuous reinforcing fibre or "tow", extrudable thermoplastic and/or thermoset resin or continuous revolution body as hereinbefore defined adapted to be employed in the process of the invention as hereinbefore defined.

In a further aspect of the invention there is provided support means for continuous reinforcing fibre or "tow", molten thermoplastic and/or thermoset resin or a continuous thermoplastic revolution body as hereinbefore defined adapted to be mounted on an apparatus as hereinbefore defined for use in the process of the invention.

Further advantages of the invention will be apparent from the foregoing.

The invention is now illustrated in non limiting manner with reference to Figures 1-5 wherein similar reference numerals refer to similar features.

Figure 1 is a side elevation and vertical cross-sections through an apparatus of the invention in use

Figure 2 is a detailed side elevation and cross-section of the rotary head of apparatus of Figure 1 in use

Figure 3 is a vertical cross-section through an alternative apparatus of the invention in use

Figure 4 is a cross-section of the rotary head of any apparatus of the invention in use

Figure 5 is a schematic representation of the component units of an apparatus of the invention for use in the process of the invention.

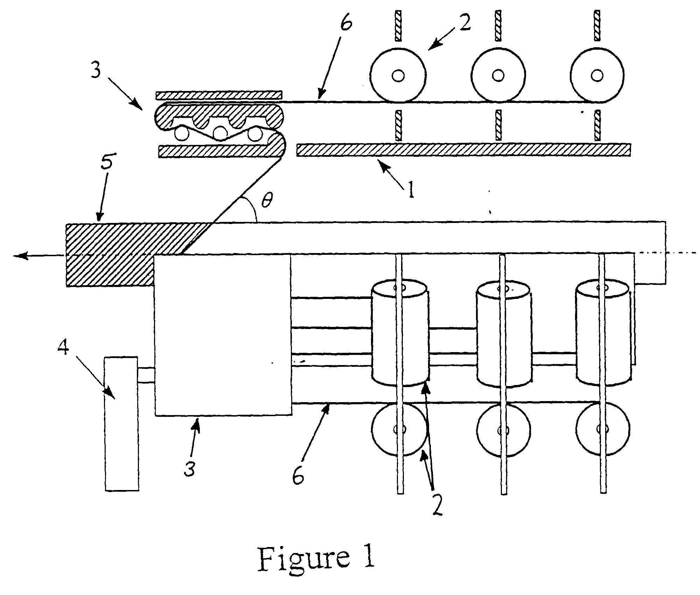

In Figure 1 is shown a rotary assembly (1) adapted to carry creels of continuous reinforcing fibre (2) in rotating manner. The rotational speed of the assembly is controlled in proportion to the speed of a thermoplastic pipe (5) advanced co-axially therewith, whereby the reinforcement may be laid down at a desired helical angle (the winding angle, 0, as shown). The storage creels (2) are adapted to be mounted on axial supports whereby they may reel-out causing unwinding of reinforcing fibre (6). The rotary head (3) comprising a rotary impregnation unit is adapted to provide support for molten thermoplastic resin in the form of one or more reservoirs as hereinbefore defined. The unit comprises pins, plates or baffles over which the fibre reinforcement is drawn in the presence of the molten thermoplastic.

The unit is heated, either electrically wherein the current may be supplied via slip rings, or by external means as hereinbefore defined. An extruder is shown (4) which is stationary and is adapted to supply thermoplastic melt continuously to support means in the rotary head (3).

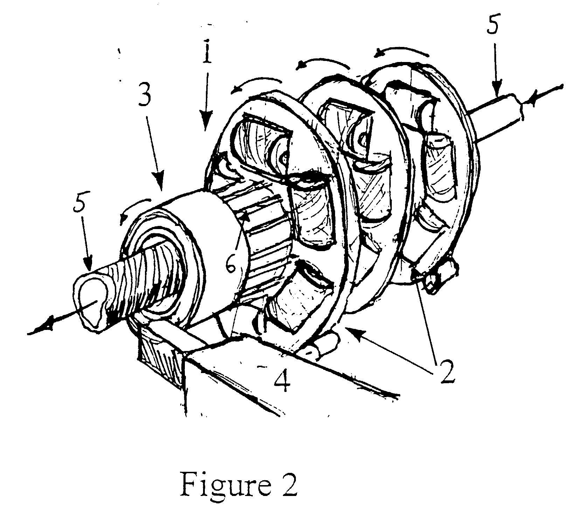

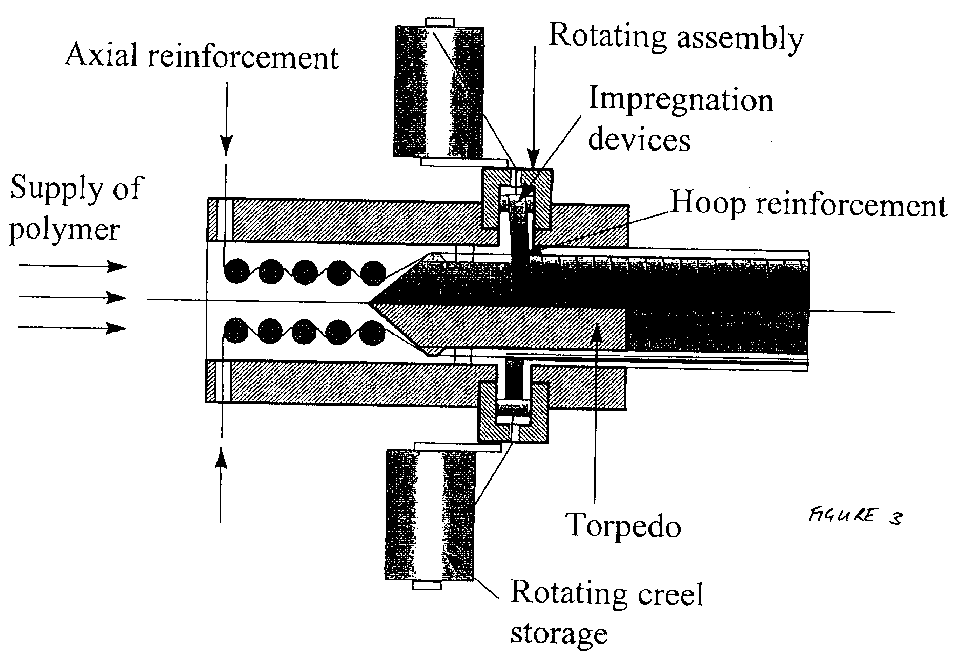

Figure 2 shows the apparatus of the invention in detail wherein component parts are as described with reference to Figure 1. From the Figure it is apparent that the plurality of reinforcing fibres (6) is varied by means of the plurality of supports for creels (2). The manner of providing molten resin from stationary extruder (4) to rotary winding head (3) is shown, whereby a continuous supply may be provided at a desired rate. The advancement of revolution body (5) is indicated, at a constant axial velocity which may be selected as desired. The body is suitably a pipe which is manufactured by the process of screw extrusion. Suitably the pipe is heated at its outer surface prior to entering the apparatus to aid adhesion of the reinforcing layer. The apparatus winds thermoplastic pipe helically at an angle of +55° with a complete cover of impregnated reinforcement, whereafter the pipe suitably advances to a second apparatus rotating in the opposite sense, which provides a second balancing cover at an angle of -55°.

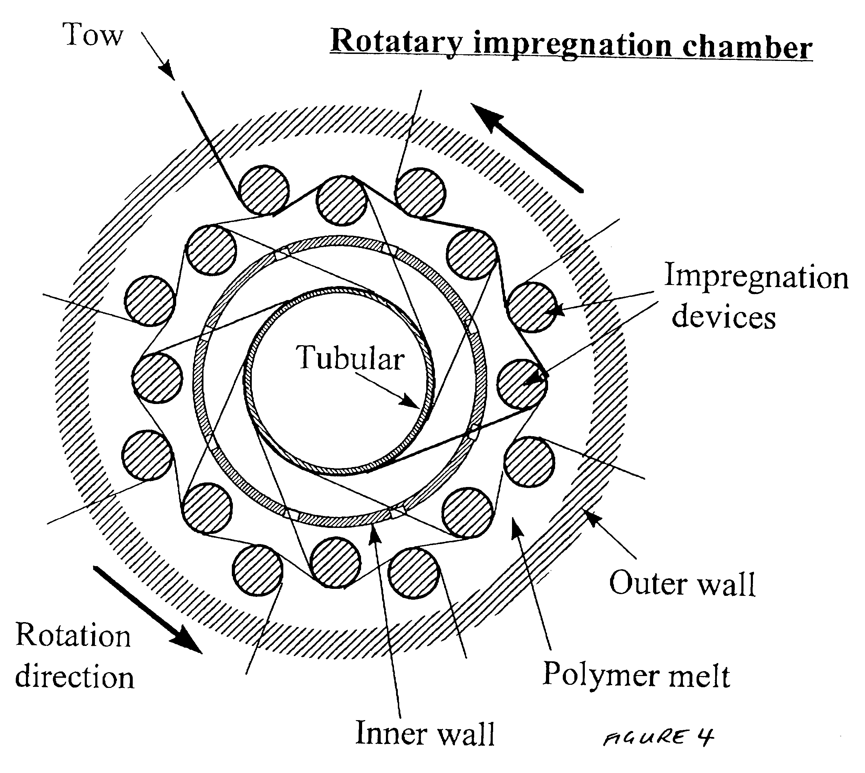

In Figure 3 is shown an alternative apparatus with a combined rotary extrusion and impregnation unit (3, 4). In this case polymer is provided co-axially in the opposite direction to the advancing prismatic revolution body (5). The apparatus also provides supports for laying down a first axially aligned reinforcing fibre upon which the tow windings are laid down at the desired angle.

In Figure 4 is shown an arrangement of impregnation supports which may be employed with any apparatus of the invention having stationary or rotary reservoir of extruded resin.

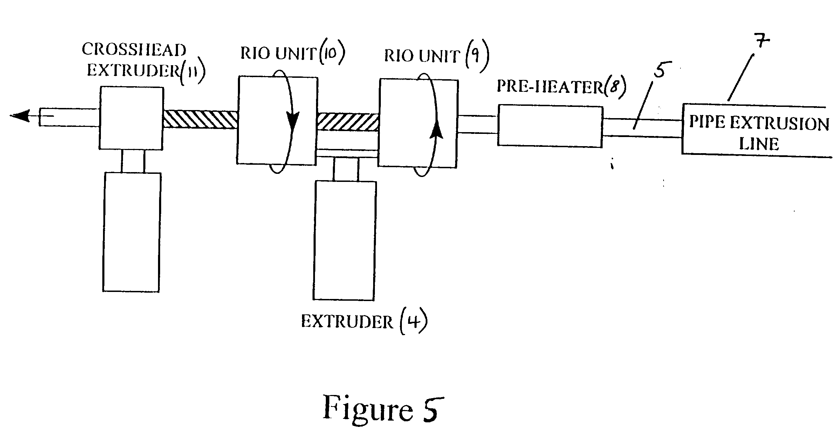

In Figure 5 the units of the process of the invention are indicated comprising integral screw extruder (7) providing a pipe (5) to pre-heater (8) for the softening of the outer surface thereof. The softened pipe is advanced to first and second apparatus of the invention rotating in opposite sense (9, 10) supplied by stationary extruder (4). The wound pipe advances to a cross-head extruder (11) comprising a further extruder and cross-head die as hereinbefore defined.

The convenience of manufacture will be apparent from the foregoing whereby a product may be obtained in an integral process in place of the known two or three stage processes employed to date. The products of the process have excellent mechanical properties adapted for new and existing purposes as hereinbefore defined.

The invention is now illustrated in non-limiting manner with respect to the following examples.

## Example 1

A polypropylene internal liner of 25.4mm internal diameter, 7mm wall thickness was wrapped with + and - 55° covers of E-glass. The linear speed of the liner passing through the process was 3m/min. The rotary impregnation unit for each layer was equipped with 12 creels of glass fibre weighing 2.4kg per km, and the rotational speed of each unit was controlled according to the relationship stated earlier to give the required winding angle. Each fibre tow passed over 6 pins each 15mm diameter in the presence of polymer melt before exiting the impregnation unit. The tube thus produced was then equipped with a 5mm thick outer cover of polypropylene. When tested under internal pressure the tube was found to burst at a pressure of 220 bar.

## Example 2

A polypropylene liner as described above was equipped with 24 tows of axial glass fibre reinforcement (as descri+bed above) over which was wrapped a single cover of near-hoop orientation. The thickness of the near-hoop winding was such that one complete rotation per tow of reinforcement was applied for every 2.16mm of product. The linear speed of the product was 1m/min and the rotation rate of the impregnation unit which in this case carried 4 creels of glass fibre was 112 rpm. Each fibre tow passed over 6 pins of 15mm diameter in the presence of polymer melt before exiting the impregnation unit. Again the tube was equipped with a 5mm thick outer cover of polypropylene. When tested under internal pressure this tube which contained an approximately similar amount of glass fibre to the one in the previous example was found to burst at a pressure of 210 bar. In comparison to the tube in the previous example however this tube possessed significantly greater axial stiffness because of the axial reinforcement, and the lower burst pressure was due to the near-hoop winding employed.

Example 3

A polyethylene liner of 100mm internal diameter and 5mm wall thickness was wrapped with + and - 55° covers of E-glass. The linear speed of the liner passing through the process was 0.8m/min. The rotary impregnation unit for each layer was equipped with 72 creels of glass fibre weighing 2.4kg per km, and the rotational speed of each unit was controlled according to the relationship stated earlier to give the required winding angle. Each fibre tow passed over 4 pins of 15 mm diameter in the presence of polymer melt before exiting the impregnation unit. The tube thus produced was then equipped with a further 5mm thick outer cover of polyethylene. When tested under internal pressure the tube was found to burst at a pressure of 115 bar.

**Claims**

1. Process for the manufacture of reinforced composite revolution bodies comprising contacting at elevated temperature a plurality of substantially aligned continuous reinforcing fibres with molten extruded thermoplastic and/or thermoset resin, and contacting the fibre supported molten resin with a continuous thermoplastic and/or thermoset revolution body in manner to provide a continuously wound reinforced body.

2. Process as claimed in Claim 1 in which the continuous body and the point of contacting thereof with fibres are advanced with respect to each other, in co-axial direction.

3. Process as claimed in any of Claims 1 and 2 wherein fibre is in the form of bundles of fibres, hereinafter tows, selected from glass fibres, aramid fibres, carbon fibres and the like.

4. Process as claimed in any one of Claims 1 to 3 wherein thermoplastic and/or thermoset resin comprises semicrystalline, amorphous thermoplastic resin or a high viscosity thermoset resin.

5. Process as claimed in any one of Claims 1 to 4 wherein a revolution body is a hollow or otherwise solid article especially of prismatic section, and of tubular shape such as a cylinder, pipe or the like.

6. Process as claimed in any one of Claims 1 to 5 wherein contacting is carried out on a plurality of impregnation supports selected from cylindrical or non-cylindrical shaped surfaces such as knives, wedges, baffles, plates, pins, barrel shaped surfaces and the like.

7. Process as claimed in any one of Claims 1 to 6 wherein fibre is laid down in manner to completely cover the entire surface of the revolution body by helical winding in one or both senses about the axis of the revolution body.

8. Process as claimed in any one of Claims 1 to 7 wherein the angle of helical winding, defined relative to the axis of the revolution body is determined for any rotational speed $w$ of the impregnation unit and for axial product speed $u$ for a product diameter $d$ by the relationship:

$$\theta = \tan^{-1} \frac{(\pi d w)}{(u)}$$

9. Rotary impregnation and overwinding apparatus comprising a rotary assembly adapted to provide a plurality of continuous fibres, rotary support means adapted to provide one or more reservoirs of molten thermoplastic and/or thermoset resin and a rotary head adapted to lay down impregnated fibre onto an advancing continuous thermoplastic and/or thermoset revolution body co-axial therewith.

10. Rotary impregnation and overwinding apparatus as claimed in Claim 9 wherein impregnation and/or coating of fibres with resin takes place within the rotary apparatus or associated in rotary manner therewith.

11. Rotary impregnation and overwinding apparatus as claimed in any of Claims 9 and 10 wherein the rotary head comprises channels, apertures and recesses and the like adapted to receive aligned fibres, in addition to a plurality of impregnating supports adapted to tension and enable impregnation of fibres by a desired degree of spreading thereof, and a further set of channels, apertures, recesses and the like through which impregnated and/or coated fibre is passed for lay down on the revolution body.

12. Rotary impregnation and overwinding apparatus as claimed in any one of Claims 9 to 11 wherein impregnation supports may be rotating or fixed relative to the body of the rotary assembly and may be orientated with axis parallel to, tangential to, inclined or otherwise with respect to the axis of the assembly.

13. Rotary impregnation and overwinding apparatus as claimed in any one of Claims 9 to 12 wherein rotary support means are stationary or rotating means for providing one or more reservoirs of molten resin to the rotary head.

14. Continuous reinforced composite thermoplastic and/or thermoset revolution body obtained by the process of Claims 1 to 8 as hereinbefore defined.

15. Continuous reinforced composite thermoplastic and/or thermoset revolution body as hereinbefore defined in Claim 14 for the distribution of fluid in a continuous network, preferably for the distribution of gaseous or liquid fluid at elevated pressure.

16. Continuous reinforcing fibre, extrudable thermoplastic and/or thermoset resin, continuous revolution body, rotary support, impregnation support means or other component parts as defined and for use in the process or apparatus of any of Claims 1 to 13.

Figure 1

Figure 2

Axial reinforcement

Rotating assembly

Impregnation devices

Supply of polymer

Hoop reinforcement

Torpedo

Rotating creel storage

FIGURE 3

EP 0 854 029 A2

Tow

**Rotatary impregnation chamber**

Impregnation devices

Tubular

Rotation direction

Inner wall

Outer wall

Polymer melt

FIGURE 4

EP 0 854 029 A2

Figure 5